# EUROPEAN PATENT APPLICATION

(11) **EP 4 183 622 A1**
(43) Date of publication of application: **24.05.2023**
(21) Application number: 21209084.9
(22) Date of filing: 18.11.2021
(51) Int. Cl.: B60N 2/20

(54) **MODULAR SEAT AND VEHICLE COMPRISING SUCH MODULAR SEAT**

(71) Applicant: VOLVO TRUCK CORPORATION, 405 08 Göteborg (SE)
(72) Inventor: Godefroy, Manu, 30580 LA BRUGUIERE (FR); ALLIO, Stéphane, 69680 CHASSIEU (FR)
(74) Representative: Plasseraud IP

(57) **Abstract**

Modular seat (20) comprising a sitting base (21) and a backrest (30), the backrest (30) comprising a first backrest part (31) and a second backrest part (35), wherein the modular seat (20) is configured to present:
- a seat configuration in which the first backrest part (31) stands upright from the sitting base (21) and the second backrest part (35) is stored behind the first backrest part (31)
- a support configuration in which the first backrest part (31) is placed over the sitting base (21) and the second backrest part (35) is superposed on the first backrest part (31), a support surface of the second backrest part (35) laying horizontally upwards, and
- a bunk configuration in which the first backrest part (31) is placed over the sitting base (21) and the second backrest part (35) extends in alignment with the first backrest part (31), first (34) and second back surfaces of the first (31) and second (35) backrest parts laying horizontally upwards.

## Description

### Technical Field

This disclosure pertains to the field of modular seats, especially for vehicles, and more particularly for commercial vehicles.

### Background Art

To save space while ensuring comfort of a user, it is often turned to modular pieces of furniture having different configurations each designed for a specific purpose. In this respect, modular seats have been developed to enable the user to adopt different positions on the modular seat depending on the activity performed by the user on the seat: resting, reading, working, eating, etc.

This is especially the case for rooms of a home or an office but also for a cab of a vehicle. Indeed, in many professions requiring use of vehicles, and especially for drivers of commercial vehicles, the driver spends a long time in the vehicle for many other purposes than driving since the driving time represents only a little proportion of this time spent in the vehicle.

Efforts are continuously made to improve the habitability of the cab in terms of comfort and modularity.

### Summary

This disclosure further improves the situation.

To that end, according to an aspect, it is proposed a modular seat comprising a sitting base and a backrest, the sitting base presenting a sitting surface configured so that a user may sit on said sitting surface, the backrest comprising a first backrest part and a second backrest part, the first backrest part presenting a resting surface configured so that a back of the user may rest against said resting surface when the user sits on the sitting surface of the sitting base, and a first back surface opposite the resting surface, the second backrest part presenting a support surface and a second back surface opposite the support surface,
wherein the modular seat is configured to present:
- a seat configuration in which the first backrest part stands upright from the sitting base and the second backrest part is stored behind the first backrest part with the second back surface facing the first back surface, the sitting and resting surfaces being arranged to receive the user sitting on the modular seat,
- a support configuration in which the first backrest part is placed over the sitting base with the resting surface facing the sitting surface, and the second backrest part is superposed on the first backrest part with the second back surface facing the first back surface, the support surface laying horizontally upwards, and
- a bunk configuration in which the first backrest part is placed over the sitting base with the resting surface facing the sitting surface, and the second backrest part extends in alignment with the first backrest part, the first and second back surfaces laying horizontally upwards.

Hence, the disclosure proposes a modular seat on which the user may sit in the seat configuration, rest or relax in the bunk configuration, work, eat or put personal belongings in the support configuration.

The sitting base may extend along an extension direction between opposite front and rear ends, the first backrest part may extend between opposite bottom and top ends and the second backrest part may extend between opposite connecting and free ends, wherein the bottom end of the first backrest part is pivotally mounted to the rear end of the sitting base along a first pivot axis perpendicular to the extension direction between an unfolded position in which the resting surface is spaced apart from the sitting surface, and a folded position in which the resting surface faces the sitting surface, and wherein the connecting end of the second backrest part is pivotally mounted to the top end of the first backrest part along a second pivot axis perpendicular to the extension direction between an unfolded position in which the second back surface is spaced apart from the first back surface, and a folded position in which the second back surface faces the first back surface, wherein:
- in the seat configuration, the first backrest part is in the unfolded position and the second backrest part is in the folded position,
- in the support configuration, the first backrest part is in the folded position and the second backrest part is in the folded position,
- in the bunk configuration, the first backrest part is in the folded position and the second backrest part is in the unfolded position.

The support surface may be rigid and present at least a flat area.

The first and second back surfaces may be soft.

According to another aspect, the invention proposes a vehicle comprising a cab defining an inner space configured to receive a driver, the cab comprising a modular seat as defined previously.

The cab may comprise a driving seat arranged within the inner space in front of a steering wheel so that the driver sits on said driving seat to drive the vehicle, the modular seat being different from the driving seat.

The cab may comprise opposite front and back walls delimiting the inner space in a longitudinal direction L of the vehicle, the modular seat being arranged longitudinally close to the back wall, the sitting and resting surfaces of the modular seat in the seat configuration being directed towards the front wall.

Alternatively or in a complementary manner, in which case the vehicle comprises then several modular seats, the cab may comprise opposite first and second side walls delimiting the inner space in a transverse direction of the vehicle, the modular seat being arranged transversally close to the first side wall, the sitting and resting surfaces of the modular seat in the seat configuration being directed towards the second side wall.

The vehicle may be a commercial vehicle.

### Brief Description of Drawings

Other features, details and advantages will be shown in the following detailed description and on the figures, on which:
- figure 1 is a lateral view of a vehicle according to an embodiment of the invention, the vehicle comprising a cab defining an inner space configured to receive a driver,
- figure 2 is a top view of the inner space of the vehicle of figure 1, a modular seat according to an embodiment of the invention being arranged within the inner space of the cab next to a driving seat, the modular seat being arranged longitudinally close to a back wall of the cab,
- figure 3 is a perspective view of the modular seat of figure 2, the modular seat comprising a sitting base and a backrest, the backrest comprising a first backrest part and a second backrest part, the modular seat being in a seat configuration in which the first backrest part stands upright from the sitting base and the second backrest part is stored behind the first backrest part,
- figure 4 is an enlarged view of the detail referenced IV in figure 3, illustrating a pivot connection between a rear end of the sitting base and a bottom end of the first backrest part to enable the first backrest part to move with respect to the sitting base between folded and unfolded positions,
- figure 5 is an enlarged view of a pivot connection between a top end of the first backrest part and a connecting end of the second backrest part to enable the second backrest part to move with respect to the first backrest part between folded and unfolded positions,
- figure 6 is an enlarged view along the orientation referenced O-O of the detail referenced VI in figure 5,
- figure 7 is a perspective view of the modular seat of figure 2 in a support configuration in which the first backrest part is folded over the sitting base and the second backrest part is superposed on the first backrest part, a support surface of the second backrest part laying horizontally upwards,
- figure 8 is a top view of the inner space of the vehicle of figure 1 with the modular seat in the support configuration,
- figure 9 is a perspective view of the modular seat of figure 2 in a bunk configuration in which the first backrest part is folded over the sitting base and the second backrest part extends in alignment with the first backrest part, first and second back surfaces of the first and second backrest parts laying horizontally upwards,
- figure 10 is a top view of the inner space of the vehicle of figure 1 with the modular seat in the bunk configuration,
- figures 11 and 12 are a top views of the inner space of the vehicle of figure 1, illustrating another longitudinal arrangement of the modular seat in the seat and bunk configurations respectively within the inner space of the cab,
- figures 13 and 14 are a top views of the inner space of the vehicle of figure 1, illustrating the modular seat in the seat and bunk configurations respectively arranged transversally within the inner space of the cab, close to a first side wall of the cab,
- figures 15 and 16 are a top views of the inner space of the vehicle of figure 1, illustrating another transverse arrangement of the modular seat in the seat and bunk configurations respectively within the inner space of the cab.

### Description of Embodiments

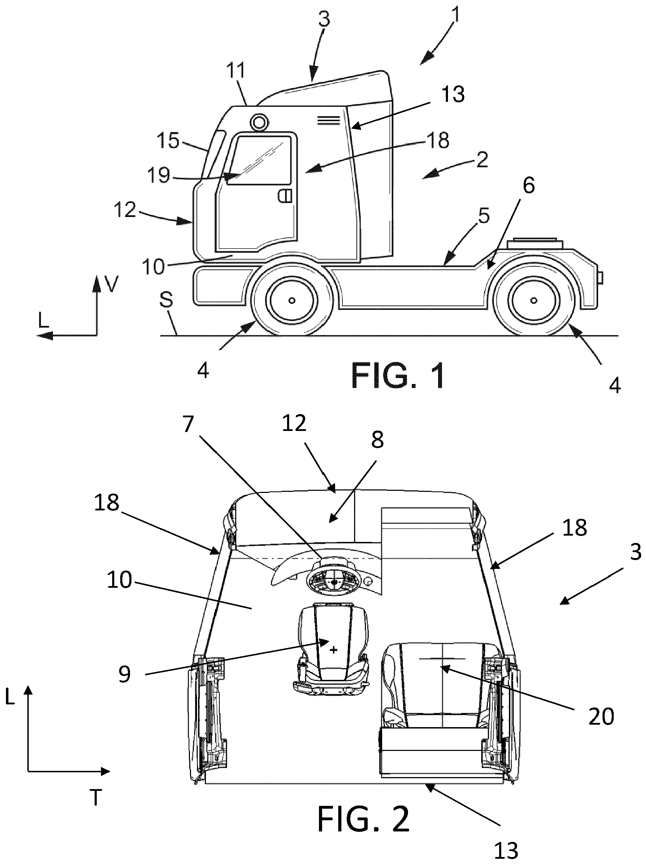

Figure 1 is a lateral view of a vehicle 1 according to an embodiment of the invention. In the represented embodiment, although not limited thereto, the vehicle 1 is a commercial vehicle of the kind tractor of a truck. The vehicle 1 comprises a frame 2 extending along a longitudinal direction L corresponding to a direction along which the vehicle 1 moves forward or rearward on a ground surface S. The frame 2 comprises a cab 3 defining an inner space configured to receive a driver, and a chassis 5 adjoining the cab 3 in the longitudinal direction L. Nevertheless, the invention applies to any other kind of commercial vehicle as well as to any kind of vehicle and, for example, of passenger vehicle.

The cab 3 comprises:
- a floor 10 and a roof 11 delimiting the inner space in a vertical direction V perpendicular to the ground surface S and to the longitudinal direction L,
- opposite front 12 and back 13 walls delimiting the inner space in the longitudinal direction L, the front wall 12 being provided with a windshield 15 on an upper part, close to the roof 11,
- opposite first and second side walls 18 delimiting the inner space in a transverse direction T perpendicular to the longitudinal L and vertical V directions, the first and second side walls 18 being provided with respective driver and passenger doors 19.

The chassis 5 may comprise two beams 6 parallel to each other along the longitudinal direction L. The beams 6 present respective internal surfaces facing each other and respective external surfaces opposite the internal surfaces.

The cab 3 and the chassis 5 are mounted on wheels 4 driven by a driving system.

Figure 2 illustrates a top view of the inner space of the vehicle 1. The inner space is provided with a driving area configured to enable the driver to drive the vehicle 1. The driving area comprises a steering wheel 7 protruding from a front control panel 8 arranged on a lower part of the front wall 12, below the windshield 15, and a driving seat 9 arranged in front of the steering wheel 7 and where the driver sits to drive the vehicle 1.

In a remaining area apart of the driving area, the inner space is provided with a separate modular seat 20. In the embodiment represented on figure 2, the modular seat 20 is arranged longitudinally close to the back wall 13 of the cab 3. It is further placed next to the driving seat 9, adjoining one side of the driving seat 9.

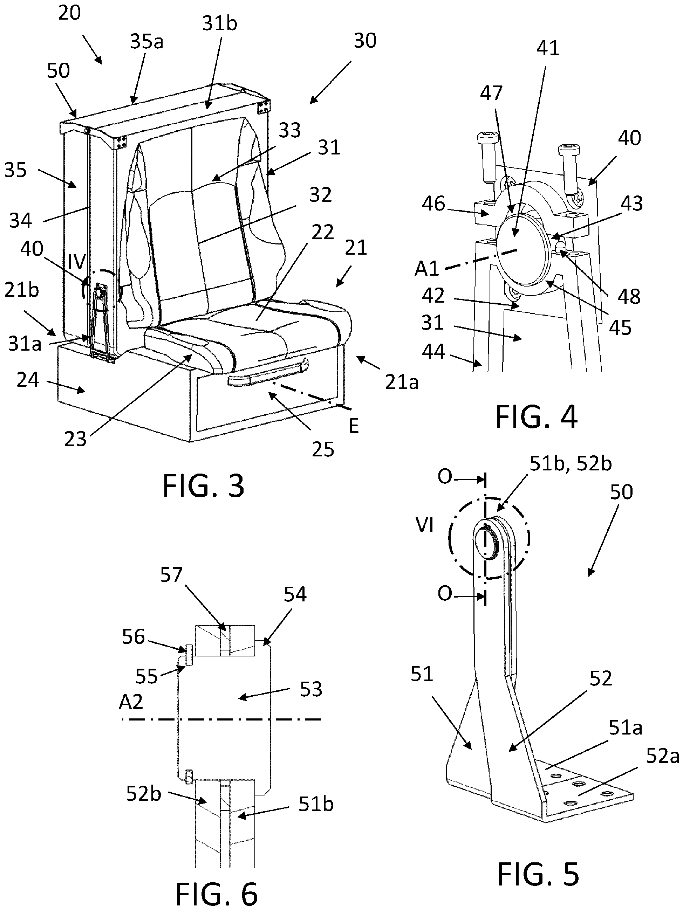

As shown in figure 3, the modular seat 20 comprises a sitting base 21 and a backrest 30.

The sitting base 21 extends along an extension direction E between opposite front 21a and rear 21b ends, and presents a sitting surface 22 configured so that the driver may sit on it. The sitting surface 22 is borne by a cushion 23. The sitting base 21 may be further configured to provide any additional commodity. For example, the sitting base 21 may comprise a frame 24 supporting the cushion 23 and provided with a storing space in a drawer 25.

The backrest 30 comprises a first backrest part 31 and a second backrest part 35. The first backrest part 31 extends between opposite bottom 31a and top 31b ends. It presents a resting surface 32 configured so that a back of the driver may rest against it when the driver sits on the sitting surface 22 of the sitting base 21. The resting surface 32 is preferably borne by a cushion 33. The first backrest part 31 also presents a first back surface 34 opposite the resting surface 32. The second backrest part 35 extends between opposite connecting 35a and free 35b ends and presents a support surface 36 and a second back surface 37 opposite the support surface 36.

The bottom end 31a of the first backrest part 31 is pivotally mounted to the rear end 21b of the sitting base 21 along a first pivot axis A1 perpendicular to the extension direction E. As shown in figure 4, a first pivot connection 40 includes a shaft 41 welded to an insert 42 screwed onto a lateral flange of the first backrest part 31. The shaft 41 is provided with an annular groove 43 on its periphery. A bracket 44 is screwed onto the frame 24 of the sitting base 21 and configured to hold the shaft 41. In particular, the bracket 44 presents an upper concave surface 45 complementary to a portion of a bottom cylindrical surface of the groove 43 of the shaft 41. A cap 46 provided with a concave surface 47 complementary to a portion of the bottom cylindrical surface of the groove 43 of the shaft 41 is screwed onto the bracket 44, opposite the upper concave surface 45, to maintain the shaft 41 on the bracket 44 while enabling the first backrest part 31 to rotate around the first pivot axis A1 with respect to the sitting base 21. Positioning members, for example in the form of one or several pins 48 cooperating with complementary holes, are provided on the bracket 44 and the cap 46 to ensure their proper positioning and prevent relative movements. In variants, the first pivot connection 40 could be implemented in any other suitable manner.

Thanks to this first pivot connection, the first backrest part 31 can move in rotation around the first pivot axis A1 with respect to the sitting base 21 between an unfolded position in which the resting surface 32 is spaced apart from the sitting surface 22, and a folded position in which the resting surface 32 faces the sitting surface 22.

Besides, the connecting end 35a of the second backrest part 35 is pivotally mounted to the top end 31b of the first backrest part 31 along a second pivot axis A2 perpendicular to the extension direction E. Figure 5 shows an enlarged view of a second pivot connection 40 between the top end 31b of the first backrest part 31 and the connecting end 35a of the second backrest part 35.

As apparent from figures 3 and 5, the second pivot connection 50 comprises a first bracket 51 having an angled end 51a screwed to the first backrest part 31, and a second bracket 52 having an angled end 52a screwed to the second backrest part 35. As shown in figure 6, pivot ends 51b, 52b of the first 51 and second 52 brackets opposite the angled ends 51a, 52a are pivotally connected by a shaft 53 extending in coaxial bores arranged in these pivot ends 51b, 52b. The shaft 53 is provided with an annular shoulder 54 in contact with an abutment surface of the first bracket 51 opposite the second bracket 52. The shaft 53 is also provided with an annular groove 55 on a shaft portion protruding from an external surface of the second bracket 52, opposite the first bracket 51. The shaft 53 is then axially blocked between the shoulder 54 and a circlip 56 placed within the groove 55. Internal surfaces of the first 51 and second 52 brackets facing each other are separated by a washer 57 in order to limit friction. In variants, the second pivot connection 50 could be implemented in any other suitable manner.

Thanks to this second pivot connection, the second backrest part 35 can move in rotation around the second pivot axis A2 with respect to the first backrest part 31 between an unfolded position in which the second back surface 37 is spaced apart from the first back surface 34, and a folded position in which the second back surface 37 faces the first back surface 34.

In figures 2 and 3, the modular seat 20 is in a seat configuration in which the first backrest part 31 is in the unfolded position and stands upright from the sitting base 21 with the top end 31b towards the roof 11 of the cab 3, and the second backrest part 35 is in the folded position and stored behind the first backrest part 31 with the second back surface 37 facing the first back surface 34. The sitting 22 and resting 32 surfaces of the sitting base 21 and the first backrest part 31 are then arranged so that the driver may sit on the modular seat 20. Besides, thanks to the aforementioned longitudinal arrangement of the modular seat 20, the extension direction E of the sitting base 21 is parallel to the longitudinal direction L. The sitting 22 and resting 32 surfaces of the modular seat 20 in the seat configuration are further directed towards the front wall 12 of the cab 3 and face the windshield 15, the support surface 36 of the second backrest part 35 facing the back wall 13 of the cab 3.

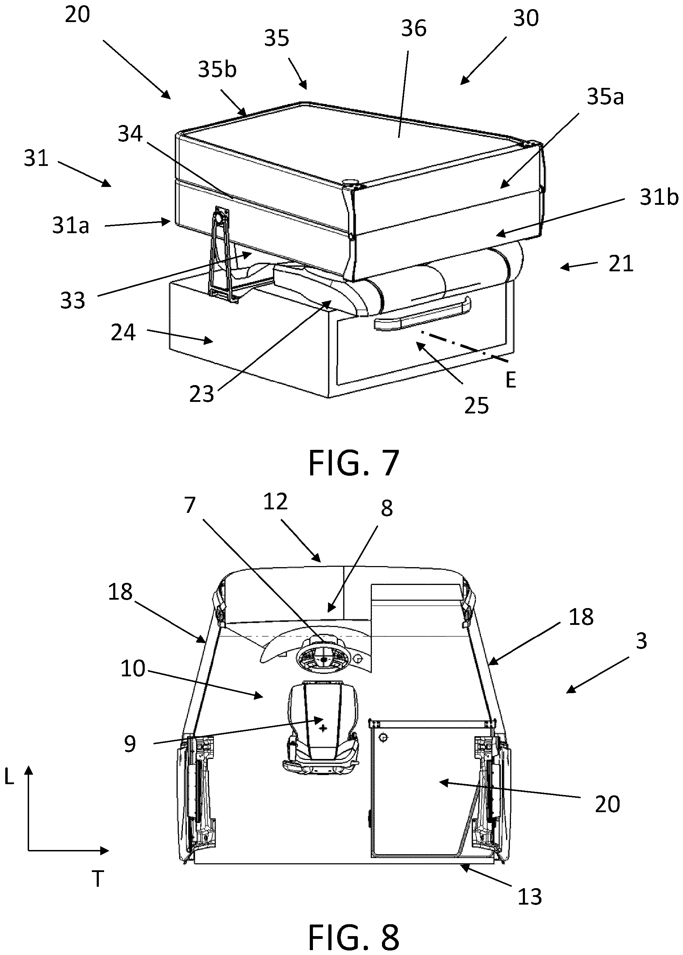

As shown in figures 7 and 8, thanks to the first 40 and second 50 pivot connections, the modular seat20 may be placed in a support configuration in which the first backrest part 31 is placed in the folded position over the sitting base 21 with the resting surface 32 facing the sitting surface 22, and the second backrest part 35 remains in the folded position and is superposed on the first backrest part 31 with the second back surface 37 facing the first back surface 34. In doing so, the support surface 36 lays horizontally upwards, towards the roof 11 of the cab 3. The support surface 36 is preferably rigid and presents at least a flat area so that it can be used as a desk enabling the driver sitting on the driving seat 9 to work for example, or as a table enabling the driver sitting on the driving seat 9 to eat or place his personal belongings for example.

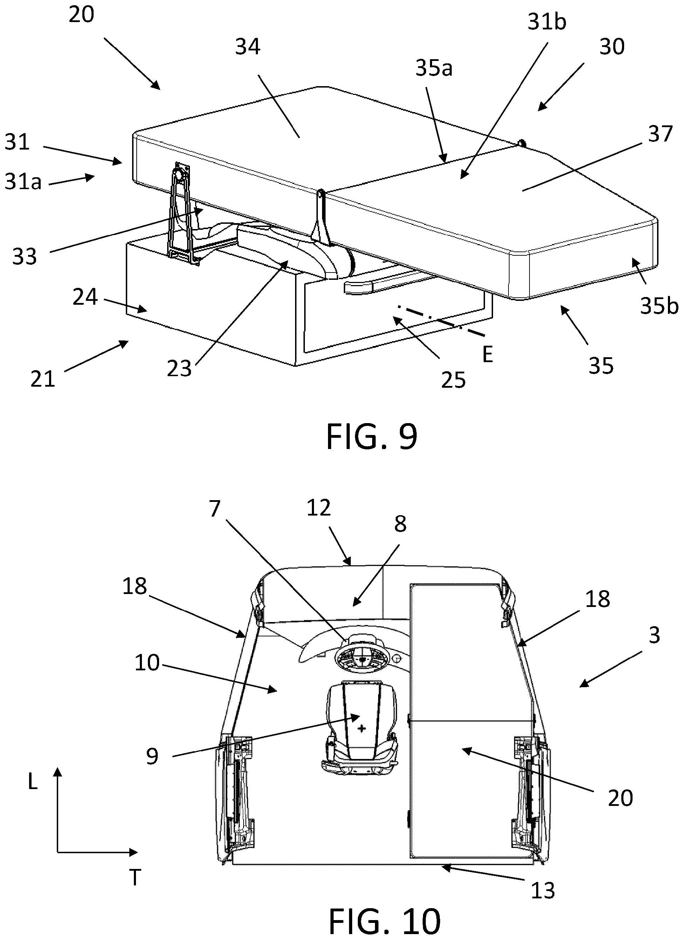

In figures 9 and 10, the modular seat 20 is placed in a bunk configuration in which the first backrest part 31 remains in the folded position over the sitting base 21 with the resting surface 32 facing the sitting surface 22 while the second backrest part 35 is moved in the unfolded position to extend in alignment with the first backrest part 31. In doing so, the first 34 and second 37 back surfaces lay horizontally upwards, towards the roof 11 of the cab 3. The first 34 and second 37 back surfaces are preferably soft so that they can be used as a bunk enabling the driver to rest or relax. In the bunk configuration, the modular seat 20 extends parallel to the longitudinal direction L, next to the driving seat 9.

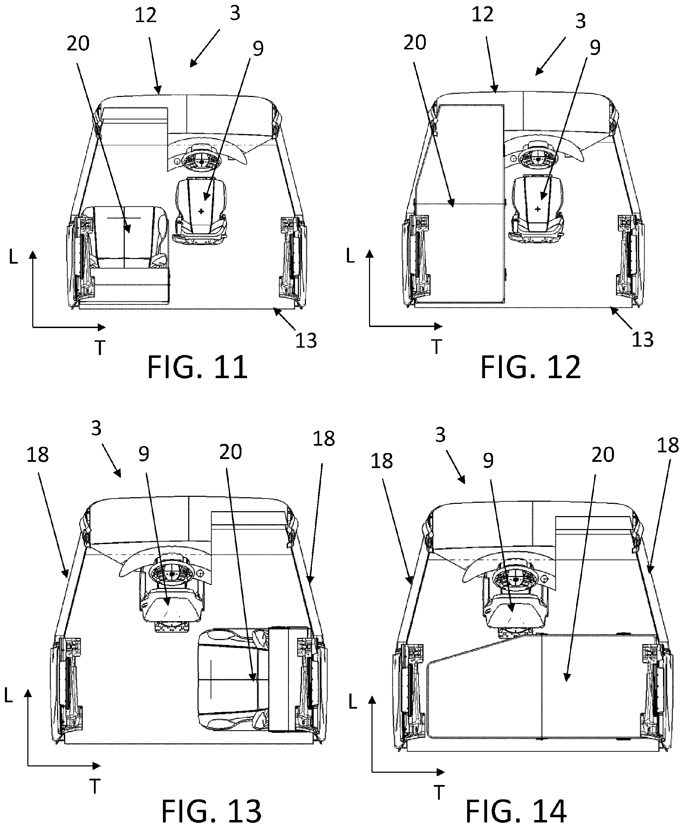

Figures 11 and 12 show another longitudinal arrangement of the modular seat 20 within the inner space of the cab 3. In figures 11 and 12, the modular seat 20 in the seat and bunk configurations respectively is arranged longitudinally, namely along the longitudinal direction L, on the other side of the driving seat 9 with respect to the previously disclosed longitudinal arrangement.

In figures 13 and 14, the modular seat 20 in the seat and bunk configurations respectively is arranged transversally within the inner space of the cab 3, close to the first side wall 18 of the cab 3. The extension direction E of the sitting base 21 of the modular seat 20 is then parallel to the transverse direction T of the vehicle 1. The sitting 22 and resting 32 surfaces of the modular seat 20 in the seat configuration are directed towards the second side wall 18 while the support surface 36 of the second backrest part 35 faces the first side wall 18. In the bunk configuration, the modular seat 20 extends parallel to the transverse direction T, behind the driving seat 9.

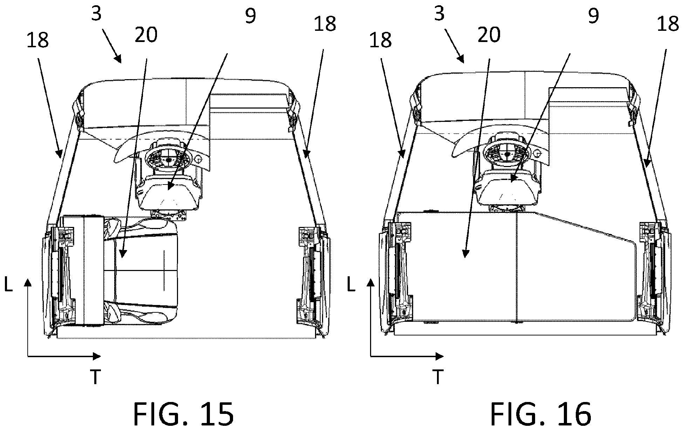

Figure 15 and 16 show another transverse arrangement of the modular seat 20 within the inner space of the cab 3. In figures 15 and 16, the modular seat 20 in the seat and bunk configurations respectively is arranged transversally, namely along the transverse direction T, on the other side of cab 3, namely with the sitting 22 and resting 32 surfaces of the modular seat 20 in the seat configuration directed towards the first side wall 18 while the support surface 36 of the second backrest part 35 faces the second side wall 18.

According to another embodiment (not represented), modular seat 20 is rotatably mounted on floor 10. Rotation axle would be perpendicular to floor 10.

The modular seat 20 has been disclosed in relation with an implementation in a vehicle. The invention is however not limited thereto. The modular seat 20 could be implemented independently of the vehicle, for example in any room of a home or an office, and even outwards, in a garden.

## Claims

1. Modular seat (20) comprising a sitting base (21) and a backrest (30), the sitting base (21) presenting a sitting surface (22) configured so that a user may sit on said sitting surface (22), the backrest (30) comprising a first backrest part (31) and a second backrest part (35), the first backrest part (31) presenting a resting surface (32) configured so that a back of the user may rest against said resting surface (32) when the user sits on the sitting surface (22) of the sitting base (21), and a first back surface (34) opposite the resting surface (32), the second backrest part (35) presenting a support surface (36) and a second back surface (37) opposite the support surface (36),
wherein the modular seat (20) is configured to present:
- a seat configuration in which the first backrest part (31) stands upright from the sitting base (21) and the second backrest part (35) is stored behind the first backrest part (31) with the second back surface (37) facing the first back surface (34), the sitting (22) and resting (32) surfaces being arranged to receive the user sitting on the modular seat (20),
- a support configuration in which the first backrest part (31) is placed over the sitting base (21) with the resting surface (32) facing the sitting surface (22), and the second backrest part (35) is superposed on the first backrest part (31) with the second back surface (37) facing the first back surface (34), the support surface (36) laying horizontally upwards, and
- a bunk configuration in which the first backrest part (31) is placed over the sitting base (21) with the resting surface (32) facing the sitting surface (22), and the second backrest part (35) extends in alignment with the first backrest part (31), the first (34) and second (37) back surfaces laying horizontally upwards.

2. Modular seat (20)according to claim 1, wherein the sitting base (21) extends along an extension direction (E) between opposite front (21a) and rear (21b) ends, the first backrest part (31) extends between opposite bottom (31a) and top (31b) ends and the second backrest part (35) extends between opposite connecting (35a) and free (35b) ends, wherein the bottom end (31a) of the first backrest part (31) is pivotally mounted to the rear end (21b) of the sitting base (21) along a first pivot axis (A1) perpendicular to the extension direction (E) between an unfolded position in which the resting surface (32) is spaced apart from the sitting surface (22), and a folded position in which the resting surface (32) faces the sitting surface (22), and wherein the connecting end (35a) of the second backrest part (35) is pivotally mounted to the top end (31b) of the first backrest part (31) along a second pivot axis (A2) perpendicular to the extension direction (E) between an unfolded position in which the second back surface (37) is spaced apart from the first back surface (34), and a folded position in which the second back surface (37) faces the first back surface (34), wherein:
- in the seat configuration, the first backrest part (31) is in the unfolded position and the second backrest part (35) is in the folded position,
- in the support configuration, the first backrest part (31) is in the folded position and the second backrest part (35) is in the folded position,
- in the bunk configuration, the first backrest part (31) is in the folded position and the second backrest part (35) is in the unfolded position.

3. Modular seat (20)according to any of claims 1 and 2, wherein the support surface (36) is rigid and presents at least a flat area.

4. Modular seat (20)according to any of claims 1 to 3, wherein the first (34) and second (37) back surfaces are soft.

5. Vehicle (1) comprising a cab (3) defining an inner space configured to receive a driver, the cab (3) comprising a modular seat (20) according to any of claim 1-4

6. Vehicle (1) according to claim 5, wherein the cab (3) comprises a driving seat (9) arranged within the inner space in front of a steering wheel (7) so that the driver sits on said driving seat (9) to drive the vehicle (1), the modular seat (20) being different from the driving seat (9).

7. Vehicle (1) according to claim 6, wherein the cab (3) comprises opposite front (12) and back (13) walls delimiting the inner space in a longitudinal direction (L) of the vehicle (1), the modular seat (20) being arranged longitudinally close to the back wall (13), the sitting (22) and resting (32) surfaces of the modular seat (20) in the seat configuration being directed towards the front wall. (12)

8. Vehicle (1) according to claim 6 or 7, wherein the cab (1) comprises opposite first and second side walls (18) delimiting the inner space in a transverse direction (T) of the vehicle (1), the modular seat (20) being arranged transversally close to the first side wall (18), the sitting (22) and resting (32) surfaces of the modular seat (20) in the seat configuration being directed towards the second side wall (18).

9. Vehicle (1) according to any of claims 5 to 8, wherein said vehicle (1) is a commercial vehicle.
